Europäisches Patentamt

(19) European Patent Office

Office européen des brevets

(11) Numéro de publication : **0 260 161 B1**

(12) # FASCICULE DE BREVET EUROPEEN

(45) Date de publication du fascicule du brevet :
**16.10.91 Bulletin 91/42**

(51) Int. Cl.⁵ : **H01F 41/22, G11B 11/10, G03G 5/16**

(21) Numéro de dépôt : **87401533.2**

(22) Date de dépôt : **01.07.87**

---

(54) **Procédé pour remédier au vieillissement d'un milieu d'enregistrement magnétooptique.**

---

(30) Priorité : **11.07.86 FR 8610211**

(43) Date de publication de la demande :
**16.03.88 Bulletin 88/11**

(45) Mention de la délivrance du brevet :
**16.10.91 Bulletin 91/42**

(84) Etats contractants désignés :
**DE FR GB IT NL**

(56) Documents cités :
**EP-A- 0 157 664**
**IEEE TRANSACTIONS ON MAGNETICS, vol. MAG-17, no. 6, novembre 1981, pages 2704-2706, IEEE; D.F. SHEN et al.: "Effect of annealing on the compensation temperature of RE-TM amorphous films"**
**JOURNAL OF APPLIED PHYSICS, vol. 57, no. 8, partie 2B, avril 1985, pages 3894-3896, American Institute of Physics, Woodbury, New York, US; M.K. BHATTACHARYYA et al.: "Finite-element modeling of laser beam heating of magnetic films"**

(73) Titulaire : **BULL S.A.**
**121 avenue de Malakoff P.B. 193.16**
**F-75764 Paris Cédex 16 (FR)**

(72) Inventeur : **Roze, Danielle**
**33, rue de la Vallée**
**F-78640 Villiers Saint Frederic (FR)**
Inventeur : **Coirre, Marie-Monique**
**13, avenue Toulouse-Lautrec**
**F-78390 Bois-D'Arcy (FR)**
Inventeur : **Rio, François**
**30, avenue Joseph Kessel**
**F-78180 Montigny Le Bretonneux (FR)**
Inventeur : **Bernstein, Pierre**
**11, rue du Haut-Boutron Saint-Germain de la Grange**
**F-78640 Neauphle-Le-Château (FR)**

(74) Mandataire : **Gouesmel, Daniel**
**BULL S.A. Industrial Property Department**
**P.C.: HQ 8M006 B.P. 193.16 121 avenue de Malakoff**
**F-75764 Paris Cédex 16 (FR)**

---

**EP 0 260 161 B1**

## Description

La présente invention concerne un procédé pour remédier au vieillissement d'un milieu d'enregistrement magnétooptique. Elle est plus particulièrement applicable aux mémoires à disques magnétooptiques.

On sait que les mémoires à disques magnétooptiques sont des mémoires où les informations sont portées par des disques magnétiques et lues par des dispositifs optoélectroniques. Ces mémoires à disques sont des solutions très interessantes puisqu'elles permettent d'obtenir des densités radiale et longitudinale de l'ordre respectivement de 10000 pistes par centimètre et 10000 informations par centimètre. (La densité radiale est le nombre d'informations par unité de longueur mesurée suivant le diamètre du disque alors que la densité longitudinale est le nombre d'informations par unité de longueur mesurée suivant la circonférence d'une piste).

Dans les mémoires magnétooptiques, un mode d'écriture des informations souvent utilisé est le mode dit "thermo-magnétique" qui consiste à combiner l'effet thermique dû à l'impact d'un faisceau laser sur la surface d'enregistrement du disque magnétique et l'application d'un champ magnétique à l'endroit de l'impact, des rappels sur le mode d'écriture "thermo-magnétique" étant effectués dans le brevet français N° 2514913 déposé par la Compagnie Internationale pour l'informatique Cii Honeywell Bull le 16 Octobre 1981. A l'endroit de l'impact du faisceau laser, l'échauffement du milieu magnétique est de l'ordre de quelques dizaines de degrés, et peut même dépasser la centaine de degrés.

Le mode de fonctionnement des mémoires à disques magnétooptiques repose sur l'effet magnétooptique. Ce dernier est caractéristique de certains matériaux magnétiques notamment les alliages comportant un métal de la première série de transitions (Fe-Co-Vn-Cr-Mn) et un des métaux du groupe des terres rares lourds tel que le terbium ou le gadolinium ou le dysprosium.

L'effet magnétooptique de ces matériaux magnétiques concerne l'interaction d'une lumière polarisée rectiligne avec l'état magnétique du matériau. Cette interaction peut avoir lieu par transmission de la lumière à travers le matériau et alors l'effet magnétooptique est appelé effet Faraday. Elle peut également avoir lieu par réflexion sur le milieu d'enregistrement magnétooptique et l'effet magnétooptique est alors appelé effet Kerr.

L'interaction d'une lumière polarisée rectiligne avec l'état magnétique du matériau magnétique d'enregistrement d'une mémoire magnétooptique a pour conséquence la rotation du vecteur champ électrique dans le plan perpendiculaire à la direction de propagation de la lumière. Le sens de cette rotation est fonction de cet état magnétique (défini notamment par le sens de l'aimantation dans le matériau à l'endroit où celui-ci reçoit la lumière polarisée rectiligne). Pour lire les informations enregistrées sur un milieu magnétique d'enregistrement magnétooptique il suffit alors de détecter le sens de rotation du vecteur champ électrique.

De plus amples détails sur la manière dont peuvent être lues des informations dans une mémoire magnétooptique, sont décrites dans le brevet N° 2.514.913 précité.

On connait des milieux magnétiques d'enregistrement dont les propriétés sont telles que le rapport signal/bruit du dispositif optoélectronique de lecture associé à ce milieu est élevé. De tels milieux sont par exemple décrits dans l'article de G.A.N. CONNEL, R. ALLEN et M.MANSURIPUR du Centre de Recherche de la Firme XEROX de Palo Alto aux U.S.A et ayant pour titre "Interference enhanced Kerr Spectroscopy for very thin absorbing films-applications to amorphous terbium iron" publié dans le Journal of Magnetism of magnetic materials N° 35 de 1983 de la North Holland Publishing Company.

Un tel milieu à propriétés magnétooptiques, est multicouches. Il comprend successivement une couche réflectrice, généralement métallique, disposée sur un substrat, une première couche diélectrique, une couche en matériau magnétique ayant des propriétés magnétooptiques, à savoir un alliage de préférence comportant du fer ou du cobalt, et un terre rare lourd par exemple du terbium ou du gadolinium, et une seconde couche diélectrique. Le mode de fonctionnement d'un tel milieu multicouches est rappelé dans la demande de brevet français N° 84.03113 (EP-A-157 664) dont le titre est "Milieu d'enregistrement magnétooptique" déposée par la Compagnie demanderesse le 29 Février 1984.

On rappelle que l'épaisseur des couches d'un tel milieu est de l'ordre de quelques dizaines à quelques centaines d'Angströms et peut même atteindre un à deux milliers d'Angströms et que la couche magnétique est anisotrope avec son axe de facile aimantation perpendiculaire à sa surface. Dans la demande de brevet précipitée on indique que de tels milieux magnétiques d'enregistrement ont un inconvénient majeur à savoir que leurs propriétés magnétiques ne restent pas constantes dans le temps. En particulier, suivant que la teneur de départ X en terre rare de l'alliage fer-terre rare constituant la couche magnétooptique est inférieure ou supérieure à une valeur déterminée propre à chaque alliage, appelée composition de compensation $X_{comp}$, on observe que :

– si $X < X_{comp}$, le champ coercitif $H_c$ du milieu magnétique d'enregistrement diminue avec le temps alors que,

– si $X > X_{comp}$, on observe que le champ coercitif $H_c$ croît avec le temps, puis diminue, après que la composition $X$ soit devenue inférieure à $X_{comp}$.

2

Ce phénomène est gênant car le champ coercitif du milieu magnétique d'enregistrement doit rester compris entre certaines limites par exemple entre 500 et 1000 Oersteds.

Pour simplifier, dans la suite de la description on appellera cette détérioration des propriétés magnétiques du milieu d'enregistrement multicouches au cours du temps, vieillissement du milieu d'enregistrement.

La demande de brevet N° 84.03113 précitée décrit et revendique des solutions permettant de remédier à cet inconvénient.

L'une des solutions adoptées consiste à utiliser une couche diélectrique de protection du milieu formée d'alumine dont l'épaisseur doit être supérieure à 600 AngstrÖms. On a pu observer que sur une période de temps égale à 1000 heures, les propriétés magnétiques d'un tel milieu recouvert d'une couche diélectrique d'alumine restaient satisfaisantes à la température ambiante.

Toutefois, on a constaté que la résistance au vieillissement de ce milieu se détériore lorsqu'on l'utilise à des températures supérieures à la température ambiante, d'autant plus que la température d'utilisation est élevée. En d'autres termes, plus la température d'utilisation du milieu est élevée, plus les propriétés magnétiques du milieu se détériorent.

Ceci est extrêmement gênant lorsqu'on utilise le mode d'écriture thermo-magnétique.

La présente invention permet de remédier à cet inconvénient en renforçant considérablement la résistance au vieillissement des milieux magnétooptiques à base de métal de transition - terres rares, recouvert d'une couche d'alumine, quelle que soit la température d'utilisation de ces milieux.

L'invention est indiquée dans les revendications.

De préférence, ce recuit est effectué à une température de l'ordre de 200°C, pendant une demi-heure.

D'autres caractéristiques et avantages de la présente invention apparaîtront dans la description suivante donnée à titre d'exemple non limitatif et en se référant aux dessins annexés.

Sur ces dessins :

– la figure 1 : montre un milieu magnétique d'enregistrement multicouches tel que décrit dans la demande de brevet 84.03113 précitée ;

– la figure 2 : est une courbe rappelant la variation du champ coercitif d'un milieu magnétique d'enregistrement selon l'art antérieur tel que celui montré à la figure 1, pour une épaisseur donnée de la couche magnétique qui rentre dans sa composition, en fonction de la teneur en terre rare de l'alliage constituant la couche magnétique du milieu d'enregistrement magnétooptique ;

– la figure 3: montre comment l'on peut déterminer les caractéristiques définissant le vieillissement d'un milieu d'enregistrement magnétotoptique tel que celui montré à la figure 1.

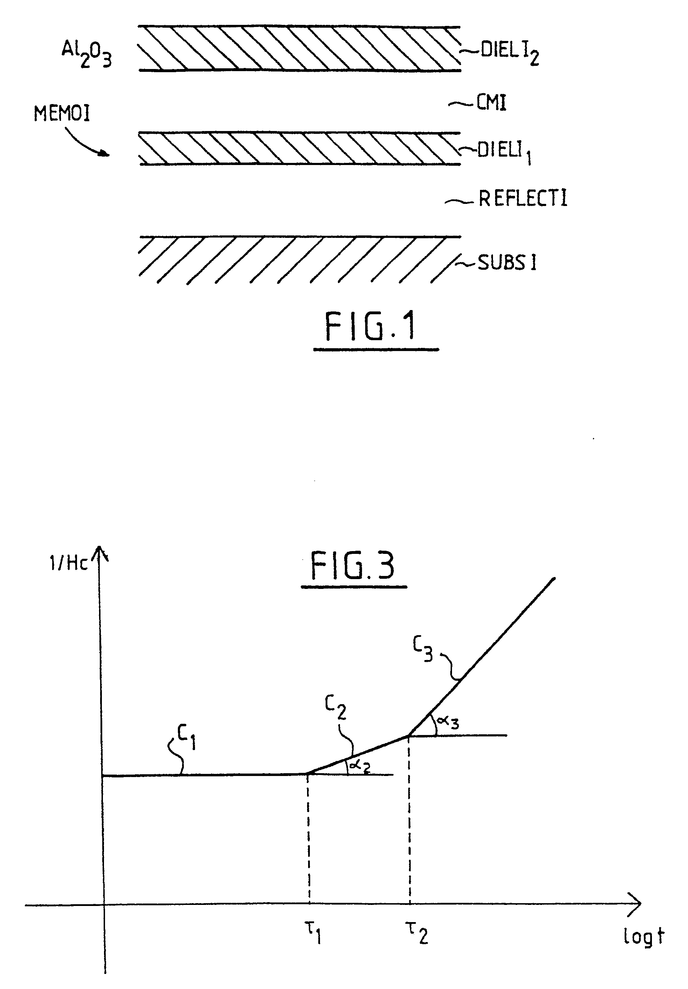

On considère la figure 1 qui montre un milieu d'enregistrement vu en coupe tel que décrit dans la demande de brevet 84.03113 précitée auquel s'applique le procédé selon l'invention.

Un tel milieu d'enregistrement magnétooptique comprend :

– un substrat SUBS, de préférence en matière isolante amagnétique,

– une couche réflectrice de la lumière REFLECTI, de préférence réalisée en un matériau métallique par exemple de l'aluminium,

– une première couche diélectrique $DIELI_1$,

– une couche magnétique CMI ayant des propiétés magnétooptiques, réalisée de préférence en un alliage de fer ou de cobalt et d'un métal du groupe des terres rares lourds, tel que le terbium ou le gadolinium,

– une seconde couche diélectrique DIELI2 réalisée de préférence dans le même matériau que la première couche diélectrique DIELI1.

L'épaisseur de la première couche diélectrique est comprise entre 200 et 1500 Angströms alors que l'épaisseur de la seconde couche diélectrique est supérieure à 600 Angströms. Ces deux couches diélectriques sont réalisées par exemple en alumine $Al_2O_3$.

Le milieu magnétooptique décrit ci-dessus en référence à la figure 1 constitue un système optique interférentiel dont le mode de fonctionnement est décrit par exemple dans l'article de G.A.N. CONNEL, cité précédemment.

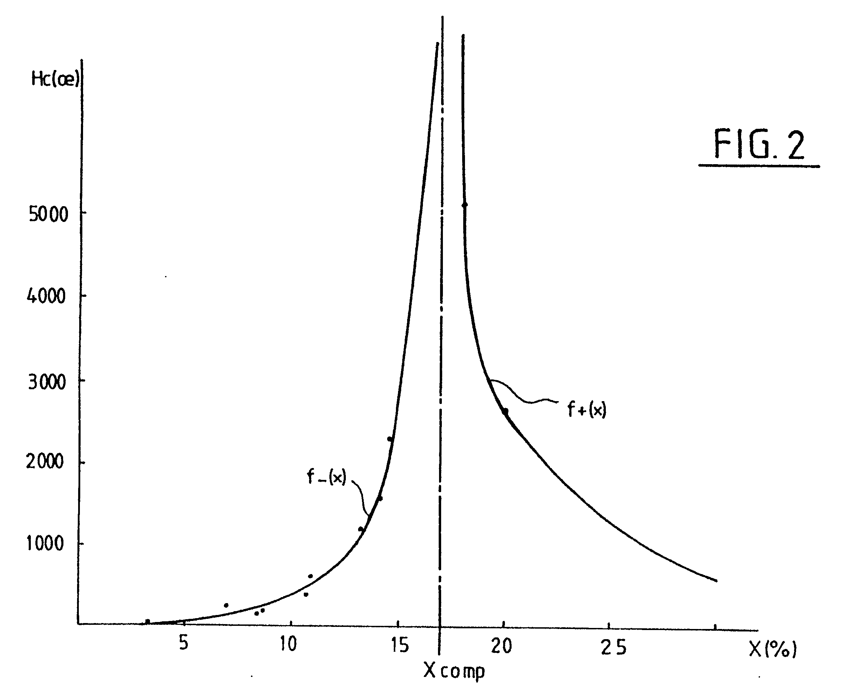

On considère désormais la figure 2 qui montre la courbe de variation du champ coercitif $H_c$ en fonction de la composition de l'alliage constituant la couche magnétique CMI. Cette courbe est établie pour une épaisseur de la couche magnétique égale à 2000 angströms et a été relevée immédiatement après la fabrication du milieu d'enregistrement magnétooptique MEMOI.

Le champ coercitif mesuré est le champ coercitif dit champ coercitif magnétooptique dont le mode d'obtention est décrit dans la demande de brevet 84.03113 précitée.

On voit que la courbe $H_c = f(X)$ se décompose en deux courbe, à savoir $f_{-X}$ et $f_{+X}$.

La première courbe $f_-(X)$ est obtenue pour les valeurs de X inférieures à une composition dite composition de compensation $X_{comp}$, pour laquelle le champ coercitif magnétooptique $H_c$ a une valeur très grande, impossible à mesurer pratiquement. On voit que la courbe f-(X) est une courbe qui croît en fonction de X.

A l'inverse la courbe f+(X) obtenue pour les valeurs de X supérieures à $X_{comp}$ décroît en fonction de X.

Dans la pratique courante la composition de l'alliage fer-terre rare que constitue la couche magnétique est différente de la composition de compensation, en étant inférieure ou supérieure à celle-ci.

Le phénomène de vieillissement d'une couche magnétooptique en fer-terre rare du type de celle montrée à la figure 1 se traduit par une diminution du champ coercitif, si X est inférieur à $X_{comp}$, par une augmentation suivie d'une diminution si X est supérieur à $X_{comp}$. Dans les deux cas, cela est dû à une diminution de la teneur en Terre Rare de la couche magnétique CMI.

Dans la pratique, le vieillissement d'une couche magnétooptique se mesure de préférence de la manière suivante.

On établit la courbe de variation de l'inverse du champ coercitif $1/H_c$ en fonction du logarithme du temps log t . Une telle courbe est montrée à la figure 3, correspondant à un milieu d'enregistrement pour lequel X < $X_{comp}$. Elle comprend trois parties $C_1$, $C_2$, $C_3$ . La partie $C_1$ est un palier où la quantité $1/H_c$ reste constante en fonction du temps à partir de l'instant initial t=0 jusqu'à l'instant $\tau_1$ .

La courbe $C_2$ est une droite à pente positive montrant que la quantité $1/H_c$ croît en fonction du temps, à partir de l'instant $\tau_1$ jusqu'à l'instant $\tau_2$, la pente de cette courbe $C_2$ étant $\alpha_2$.

La courbe $C_3$ est une courbe à pente positive $\alpha 3$ montrant que $1/H_c$ croît rapidement en fonction du temps (et par suite $H_c$ décroît rapidement en fonction du temps) à partir de l'instant $\tau_2$. A chaque point de la courbe la pente $\alpha_3$ est très supérieure à la pente $\alpha_2$ .

Pour mesurer le vieillissement, on se sert soit du temps $\tau_1$ soit du temps $\tau 2$ qui sont appelés temps caractéristiques. Ces temps caractéristiques sont fonction de la température T d'utilisation du milieu.

Il convient donc de déterminer $\tau 1$ et/ou $\tau 2$ pour chacune des courbes 1/Hc en fonction de logt obtenue pour une température donnée T. Nous appellerons dans la suite du texte $\tau 1$ (T) et $\tau 2$ (T) les fonctions qui donnent respectivement l'évolution des temps caractéristiques $\tau 1$ et $\tau 2$ en fonction de la température T. Chacune de ces fonctions suit la loi d'Arrhénius et l'on a

$\tau 1$ (T) = $\tau 01$ exp (W1/kT)

$\tau 2$ (T) = $\tau 02$ exp (W2/kT)

où k est la constante de Boltzmann, W1 et W2 sont appelées énergies d'activation et $\tau 01$ et $\tau 02$ des constantes de temps.

Si l'on mesure $\tau 1$ (T) et $\tau 2$ (T) à différentes températures, on peut déterminer $\tau 01$ et $\tau 02$, W1 et W2 et à partir de là la valeur de $\tau 1$ (T) et $\tau 2$ (T) pour n'importe quelle température.

Dans la demande de brevet précitée on a décrit un milieu analogue au milieu MEMOI montrée à la figure 1 et établi qu'un tel milieu magnétooptique dont la couche diélectrique $DIELI_2$ était constituée d'alumine permettait de remédier de façon relativement satisfaisante au vieillissement à température ambiante.

La couche d'alumine est déposée, par exemple par évaporation sous vide, au moyen d'un canon à électrons, à la température ambiante, de la même manière que le substrat SUBSI, la couche REFLECTI, la première couche diélectrique DIELI1 et la couche magnétooptique CMI et immédiatement après cette dernière. Un tel procédé d'obtention de la couche d'alumine et du milieu MEMOI est par exemple décrit dans l'article de M. URNER-WILLE, IEEE Transaction ou Magnetics, MAG - 17 (b) 3214 (1981).

Le milieu MEMOI peut être également déposé par pulvérisation cathodique Radio-Fréquence, à température ambiante, comme décrit dans la thèse de Dominique Jeanniot "Préparation et caractérisation de couches minces anisotropes de CoCr et de a - Fe Tb Gd pour enregistrement magnétique perpendiculaire" soutenue le 21 Novembre 1983 et présentée à l'université Pierre et Marie Curie PARIS 6.

Toutefois, si la résistance au vieillissement d'un tel milieu d'enregistrement magnétooptique dont la couche diélectrique DIELI2 est constituée d'alumine est satisfaisante pour des températures de l'ordre de la température ambiante (27°C), elle diminue considérablement avec la température.

Ainsi, pour l'échantillon 4 obtenu, selon l'un des deux procédés indiqués ci-dessus (voir tableau 1 joint en annexe)* 1 on a pu calculer que si la quantité $\tau 2$ (27°C) était égale à 2350 ans, la quantité $\tau 2$ (70°C) se réduit à 11, 4 ans et $\tau 2$ (150°C) tombe à 3, 7 jours.

La demanderesse a découvert de manière surprenante, qu'en pratiquant un recuit du milieu MEMOI montré à la figure 1 effectué à une température de 200°C sous vide immédiatement après le dépôt de celui-ci (dans la même enceinte à vide ), la résistance du milieu d'enregistrement MEMOI au vieillissement était considérablement renforcée ainsi qu'on peut s'en rendre compte en considérant le tableau I donné en annexe. Ainsi,

*Inclus dans la description, page 12.

pour l'échantillon 3 ayant subi un tel recuit pendant une demi heure, la valeur $\tau$ 2 (27°C) est de 6800 ans, soit environ 3 fois supérieure à la valeur $\tau$ 2 (27) pour l'échantillon 4 (les échantillons 1,2, 3 et 4 sont constitués de la même manière mais ont subi des recuits à 200°C de durée différente, l'échantillon 4 n'ayant subi aucun recuit, l'échantillon 3 ayant subi un recuit de 30 minutes, l'échantillon 2 un recuit d'un heure et 30 minutes, ainsi que l'échantillon 1).

Pour l'échantillon 3 la valeur $\tau$ 2 (70°C) est de 37 ans, là aussi supérieure de plus de trois fois à la valeur $\tau$ 2 (70°C) pour l'échantillon 4, alors que 2 (150°C) pour l'échantillon 3 est de 14 jours soit environ trois fois supérieure à $\tau$ 2 (150°C) pour l'échantillon 4.

Si l'on considère l'échantillon 2, on peut observer également que les temps caractéristiques $\tau$ 2 (27°), $\tau$ 2 (70°), $\tau$ 2 (150°) restent supérieurs aux temps caractéristiques correspondants de l'échantillon 4. Des observations analogues peuvent être faites pour l'échantillon 1 plus spécialement pour les temps caractéristiques $\tau$ 2 (70°) et $\tau$ 2 (150°).

On observe que le temps de recuit le plus favorable est de 30 minutes puisqu'il permet d'obtenir pour l'échantillon 3 des temps caractéristiques $\tau$ 2 qui pestent satisfaisants, y compris pour des températures de fonctionnement très élevées.

Des constatations analogues aux précédentes peuvent être faites si l'on consi-dère les valeurs $\tau$ 1 (27°C), $\tau$ 1 (70°C) et $\tau$ 1 (150°C) pour chacun des échan-tillons 1,2,3. Les valeurs de $\tau$ 1, restent satisfaisantes. En effet, si l'on considère que la durée de l'écriture d'une information selon le mode thermo-magnétique est de 60 nanosecondes, et que l'on fasse une opération d'écriture d'un même point d'un disque toutes les 16 millisecondes (temps de révolution correspondant à un tour du disque), ce qui est le cas le plus défavorable, on voit qu'on peut écrire un nombre considérable de fois, avant que le temps total d'écriture soit égal à $\tau$ 1. Cela donne pour chaque disque une durée de vie opérationnelle suffisante.

On voit donc qu'un recuit à une température de l'ordre de 200°C pendant un temps de l'ordre de 30 minutes pouvant aller jusqu'a une heure et demie permet d'améliorer considérablement la résistance au vieillissement des milieux d'enregistrement magnétoptiques tel que le milieu MEMOI où la couche diélectrique DIELI$_2$ est constituée d'alumine. Cela permet d'utilisier de tels milieux jusqu'à des températures de fonctionnement très élevées.

ANNEXE

| Echantillon | 1 | 2 | 3 | 4 |
|---|---|---|---|---|
| Durée Recuit 200°C | 1H30 | 1H30 | 30' | 0 |
| W1 ev | 0,98 | 1,16 | 1,16 | non mesurable |
| W2 ev | 1,058 | 1,064 | 1,076 | 1,1 |
| $\tau$ 01(heures) | $6,3\ 10^{-11}$ | $3,4\ 10^{-13}$ | $3,4\ 10^{-13}$ | non calculé |
| $\tau$ 02(heures) | $3,48\ 10^{-11}$ | $4,06\ 10^{-11}$ | $5,2\ 10^{-11}$ | $7,1\ 10^{-12}$ |
| $\tau$ 1 (27°C) années | 202 | 1144 | 1144 | non mesurable |
| $\tau$ 2 (27°C) années | 2270 | 3340 | 6800 | 2350 |
| $\tau$ 1 (70°C) années | 1,7 | 4,15 | 4,15 | non mesurable |
| $\tau$ 2 (70°C) années | 13,5 | 19,2 | 37 | 11,4 |
| $\tau$ 1 (150°C) heures | 29 | 22 | 22 | non mesurable |
| $\tau$ 2 (150°C) jours | 5,7 | 7,8 | 14 | 3,7 |

N.B. : Pour l'échantillon 4, les valeurs de $\tau$ 1 sont non mesurables : il n'y a pratiquement pas de palier C1 (se référer à la figure 3).

EP 0 260 161 B1

## Revendications

1. Procédé pour remédier au vieillissement d'un milieu d'enregistrement magnéto-optique comprenant au moins une couche magnétique formée d'un alliage comportant un métal du groupe des terres rares lourds et un métal du groupe de la première série de transition, recouverte d'une couche transparente à la lumière d'alumine $A1_2O_3$ caractérisé en ce que dans le but d'accroître la résistance au vieillissement magnétique du milieu d'enregistrement magnétooptique, après avoir déposé celui-ci sous vide, à température ambiante, on le soumet à un recuit.

2. Procédé selon la revendication 1 caractérisé en ce que le recuit est effectuée à une température voisine de 200°C.

3. Procédé selon l'une des revendications 1 ou 2 caractérisé en ce que la durée du recuit est sensiblement égale à une demi-heure.

4. Milieu d'enregistrement magnétooptique caractérisé en ce qu'il est obtenu selon le procédé de la revendication 1 ou 2 ou 3.

5. Disque magnétooptique caractérisé en ce qu'il comprend un milieu magnétooptique selon la revendication 4.

6. Mémoire à disque magnétooptique caractérisée en ce qu'elle comprend un disque magnétique selon la revendication 5.

## Patentansprüche

1. Verfahren zur Verminderung der Alterung eines magnetooptischen Aufzeichnungsmediums, das wenigstens eine magnetische Schicht aufweist, die von einer Legierung mit einem Metall der Gruppe der schweren seltenen Erden und einem Metall der Gruppe der ersten Reihe von Übergangselementen gebildet wird und von einer lichtdurchlässigen Schicht aus Aluminiumoxid $A1_2O_3$ überzogen ist, dadurch gekennzeichnet, daß zum Zweck der Erhöhung des Widerstandes gegen die magnetische Alterung des magnetooptischen Aufzeichnungsmediums nach dem Abscheiden desselben im Vakuum bei Umgebungstemperatur dieses einem Glühprozeß unterworfen wird.

2. Verfahren gemäß Anspruch 1, dadurch gekennzeichnet, daß der Glühprozeß bei einer Temperatur in der Umgebung von 200°C ausgeführt wird.

3. Verfahren gemäß einem der Ansprüche 1 oder 2, dadurch gekennzeichnet, daß die Dauer des Glühprozesses im wesentlichen gleich einer halben Stunde ist.

4. Magnetooptisches Aufzeichnungsmedium, dadurch gekennzeichnet, daß es gemäß dem Verfahren des Anspruches 1 oder 2 oder 3 erhalten wird.

5. Magnetooptische Platte, dadurch gekennzeichnet, daß es ein magnetooptisches Medium gemäß Anspruch 4 aufweist.

6. Magnetooptischer Plattenspeicher, dadurch gekennzeichnet, daß er eine Magnetplatte gemäß Anspruch 5 aufweist.

## Claims

1. A method for overcoming aging of a magnetooptical recording medium including at least one magnetic layer formed by an alloy including a metal of the group of heavy rare earths and a metal of the group of the first transition series covered by a layer, transparent to light, of alumina (DIELI$_2$), $A1_2O_3$, characterized in that with the object of increasing the resistance to magnetic aging of the magnetooptical recording medium, after having deposited the same in a vacuum, at ambient temperature, it is subjected to an annealing.

2. A method according to claim 1, characterized in that the annealing is performed at a temperature of approximately 200°C.

3. A method according to claim 1 or 2, characterized in that the duration of the annealing is substantially equal to one-half hour.

4. A magnetooptical recording medium (MEMOI), characterized in that it is obtained according to the method of claim 1 or 2 or 3.

5. A magnetooptical disk characterized in that it includes a magnetooptical medium according to claim 4.

6. A magnetooptical disk memory characterized in that it includes a magnetic disk according to claim 5.

7

$Al_2O_3$

MEMOI

DIELI$_2$

~CMI

~DIELI$_1$

~REFLECTI

~SUBSI

## FIG.1

## FIG.3

$1/Hc$

$C_3$

$C_2$

$\alpha_3$

$C_1$

$\alpha_2$

$\tau_1$

$\tau_2$

$\log t$

FIG. 2

EP 0 260 161 B1